# EUROPEAN PATENT APPLICATION

(11) **EP 1 617 342 A1**
(43) Date of publication of application: **18.01.2006**
(21) Application number: 05015248.7
(22) Date of filing: 13.07.2005
(51) Int. Cl.: G06F 17/30

(54) **Method and system for providing an interface to a data warehouse**

(30) Priority: 16.07.2004 US 588569 P; 21.12.2004 US 637465 P; 03.01.2005 US 26050
(71) Applicant: SAP AG, 69190 Walldorf (DE)
(72) Inventor: Sattler, Jürgen, 69168 Wiesloch (DE); Gaffga, Joachim, 69168 Wiesloch (DE)
(74) Representative: Müller-Boré & Partner Patentanwälte

(57) **Abstract**

Methods and systems for providing an interface to a data warehouse. In embodiments, data may be extracted from a form that was received at a computer system, and a determination may be made whether each of a plurality of fields in the form data match to data objects in a native data schema used by the computer system. For each field in the form data that does not match a data object in computer system, data received for that field may be stored within a part of a data structure that is assigned to that field of this form, and the data may be used at the computer system to generate a report.

## Description

### Cross-reference to Related Applications

This application claims the benefit for purposes of priority to U.S. App. No. 60/588,569, filed July 16, 2004.

Background

A data warehouse system is a computer or a group of computers that stores and maintains a collection of data designed to support business decision making processes. The data collected in such a data warehouse may be stored via use of data objects. A data object is a data construct that is associated with one or more functions (i.e., operations) that may be performed with the data that is stored in that data construct. One type of data object is a "business object" which concerns a commercial matter. Some examples of data objects may be an order, business partner, quotation, or invoice. In the case of the data object "order," for example, a user may be able to command a computer system to perform functions with an order form such as creating a new order, checking the order status, canceling the order, shipping a product that was ordered, displaying information for an order, displaying a list of data objects that are related to the order, etc. The data that is input to and stored in a data warehouse system is provided in a predefined format (e.g., data schema) that is recognized by the data warehouse system. For example, a user may employ a database application program that expects to receive certain types of data at certain points during operation of that application program.

A computer system may be used to create and manage forms for the collection of data relating to business activities. A form may be a document including a plurality of data fields and may appear on a user interface such that the user may fill in the form by selecting data field options with a pointing device and/or by typing text into the data fields. The data gathered by the form may then be sent to a form processing application, which stores the information on a database. For example, an organization may periodically send a survey form to certain employees regarding business related events. The exact information requested in such a form may change. For example, one survey may request the employee's current sales total and a later survey may request the employee's estimated annual department budget. It may not be possible to directly import the data that is provided in response to such a form into a data warehouse system because the content of the forms may change and because there may be a required format for storing data in the data warehouse. Additionally, the data warehouse may not be able to store some of the data entered via fields of a form. The present inventors have perceived these and other needs in the art.

### Brief Description of the Drawings

Figure 1 shows an exemplary system according to an embodiment of the present invention.

Figure 2 shows an example of relationships between forms and data objects according to an embodiment of the present invention.

Figure 3 shows another exemplary system according to an embodiment of the present invention.

Figure 4 shows an exemplary method according to an embodiment of the present invention.

Figure 5 shows another exempary method according to an embodiment of the present invention.

### Detailed Description

The methods and systems of the present invention provide for data exchange with a data warehouse system. Some embodiments of the present invention involve using predefined (guided) procedures for data reporting functionality in a data warehouse system.

The methods and systems of the present invention provide computer network applications with an interface for data message exchange for data design and transactional data. According to some embodiments, messages are generated via a predefined procedure in order to create reports, operational data storage (ODS) objects, and other data relating to a data reporting engine. For example, an interface may be provided in a computer system for processing design-time messages and transactional messages. Some embodiments of the present invention may provide that applications in a computer system generate messages to prepare the database infrastructure to receive messages with transactional data from the computer system. The system according to an embodiment of the present invention may be used to map messages between different systems. Additionally, the interface according to an embodiment of the present invention may provide for moving form data to a system for further processing such that a common message is stored/queued in the system. Next, the message may be read/extracted by an extractor and the data of the message may be moved to an associated ODS table for storage and further processing.

In an exemplary embodiment of the present invention, a form on a computer system may be used to create or modify a data object on a data warehouse system via predefined procedures. Such predefined procedures may allow the processing of data in both systems. For example, if a user creates a quotation document with a form in an application program on the user system, then the data may be transferred to the data warehouse system to create a data object "quotation" which uses this data. According to some embodiments of the present invention, predefined procedures and interactive forms support a framework to distribute forms via portal and/or groupware applications for online/offline data collection usage. The forms may be sent to a back-end system for further processing. In some cases, the data has no business relevance and the associated tables to store this information do not exist, and as a result, the data values may be stored in a data stack as unstructured data via field-name/field-value pairs. In such cases, the framework of predefined procedures and interactive forms may provide functionality for the generation of a message in order to communicate with a computer system regarding data reporting. The data fields and data formats of the interactive forms may be used by the predefined procedures to generate and adjust ODS tables in a database.

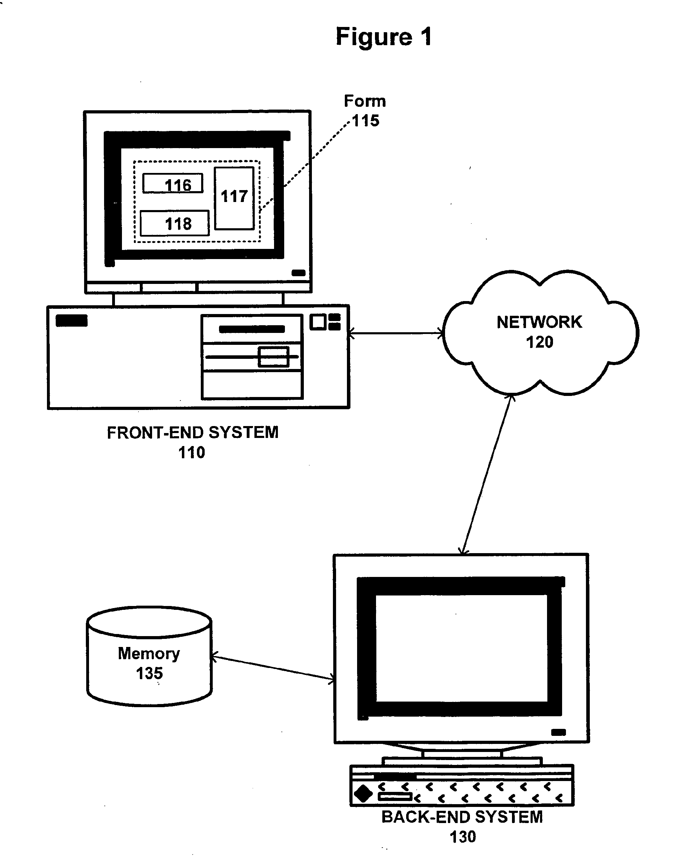

Figure 1 shows a front-end system 110, a network 120, and a back-end system 130. Front-end system 110 may be a user system, and back-end system 130 may include a data warehouse system. Front-end system 110 may be any type of device for running application software, such as for example a personal computer, a terminal, a personal digital assistant (PDA), etc. Network 120 may be any type of network for communicating information, such as a local area network (LAN), a wide area network (WAN), the Internet, or an Intranet. Back-end system 130 may be a terminal server, mainframe computer, or any type of computer system that services users over network 120. Typically, many user systems may be coupled to many other systems through network 120. The front-end system 110 and the back-end system 130 each may include databases. The databases may be stored on any type of computer readable medium, such as one or more hard disk memories, that stores instructions and data for a knowledge warehouse system that maintains a collection of data to support a decision making process. Furthermore, the back-end system 130 may include a business intelligence (BI) system and/or a exchange interface (XI) system. Data warehouse 130 may include a memory 135, which may be any type of computer readable medium, such as one or more hard disk memories, that stores instructions and data for back-end system 130. Back-end system 130 stores data according to a native data schema.

As shown in Figure 1, the front-end system 110 is displaying the text of an interactive form 115, which contains a plurality of fields 116 - 118. In some embodiments, a user running an application program on the front-end system 110 may be prompted to enter information into fields 116 - 118 on form 115. In some embodiments, both the front-end system 110 and the back-end system 130 may be adapted to execute one or more application programs that perform operations on interactive forms 115. Back-end system 130 may contain business logic, such as actions that may be executed for a specific form 115. Thus, the front-end system 110 and the back-end system 130 may contain any software that is used to execute a function on a business object.

Front-end system 110, network 120, and/or back-end system 130 may function in conjunction with web services. Web services provide a framework for the exchange of Extensible Mark-up Language (XML) messages via web-based protocols such as Simple Object Access Protocols (SOAP), Web Services Definition Language (WSDL), and Universal Description Discovery and Integration (UDDI).

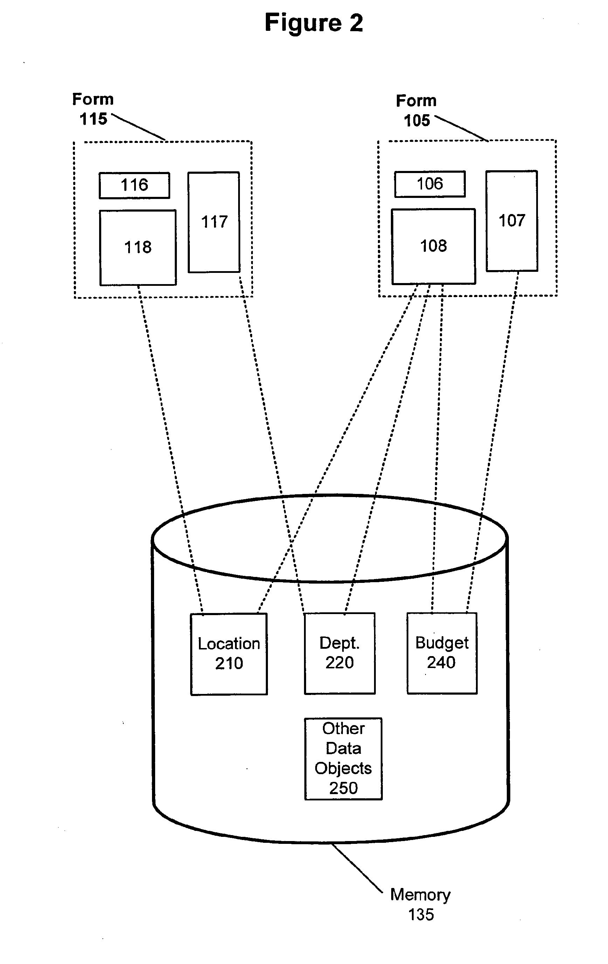

Figure 2 shows exemplary relationships between forms and data objects in a data warehouse system. Memory 135 includes various data objects and data such as location data object 210, department data object 220, budget data object 240, and other data objects 250. Form 115 of Figure 1 includes data fields 116, 117, 118. Form 105 includes data fields 106, 107, 108. Most of the data fields of forms 115 and 105 are mapped to (associated with) one or more data object(s) stored in the memory 135 of the back-end system 130. For example, in relation to form 115, data field 118 is mapped to the location data object 210 and data field 117 is mapped to the department data object 220. Also, with form 105, data field 108 is mapped to location data object 210, the department data object 220 and the budget data object 240 while data field 107 is mapped to the budget data object 240. Data fields of different forms may be mapped to the same data object(s). In some embodiments, data fields of forms 115 and 105 may not map to or be associated with any data object(s) stored in the memory 135 of the back-end system 130, for example because the data is of a new type and the back-end system has not be arranged to store any such data. In FIG. 2, data field 106 is not mapped to any data objects in memory 135.

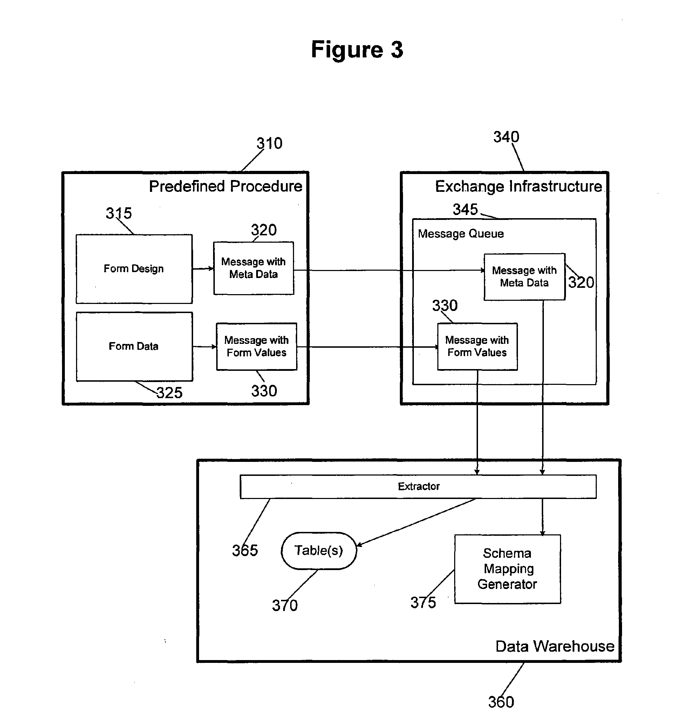

Figure 3 shows an exemplary system according to the present invention. The system of Figure 3 includes a predefined procedure 310 (e.g., guided procedure), an exchange infrastructure 340 (e.g., SAP XI system), and a data warehouse 360 (e.g., SAP BI system) that may be stored on a computer system, such as back-end system 130 in Figure 1. The predefined procedure 310 and system 340, and the data warehouse 360 may be instructions running on a processor(s) in back-end system 130 of Figure 1. The predefined procedure 310 provides an interface for a user's front-end computer system and a data warehouse computer system in order to provide data reporting functionality. Interactive form designs 315 are received and forms are used to collect data 325 within the methods of the predefined procedure 310. The framework of the predefined procedure 310 and interactive forms 315, 325 provides functionality for the generation of a messages 320, 330 in order to communicate with the data warehouse 360 and exchange information regarding data reporting. In some embodiments, the messages may be logical messages that are passed between logical and/or or physical units within back-end system 130. This framework provides that the predefined procedure 310 may generate at least one message at design-time of the framework via a button or a check-box field in a design user interface. User interaction with the button or check-box field in the user interface allows the user to decide whether the form and its data are to be used for data reporting purposes. The messages may include a message with metadata 320 and a message with form data values 330. A message with metadata 320 may be used as the basis for generating tables and other data structures, e.g., in a database. The message with form data values 330 may be the basis for data transaction that are stored in the tables generated by message 320 (e.g., design-time XI message). The messages 320, 330 are sent to the system 340. A message queue 345 may be used to process the messages 320, 330. Then the messages 320, 330 are sent to the data warehouse 360 for further processing. The data warehouse 360 may use an extractor 365 in order to read the data of the messages 320, 330. The extractor 365 may make calls from the data warehouse system 360 to obtain messages 320, 330 from the queue 345. The extractor 365 extracts data from the messages 320, 330 and then converts the extracted data to a data format that may be storable in database table(s) 370 (e.g., an ODS table). The extractor 365 may convert the data by mapping the data according to a data definition previously defined by a native data schema. The extractor 365 processes the data according to the structures of a database system as defined by the schema of back-end system 130. The schema mapping generator 375 defines the parameters (schema) for data structures in the data warehouse 130. The extracted data of the messages 320, 330 may be sent to table(s) 370 for storage.

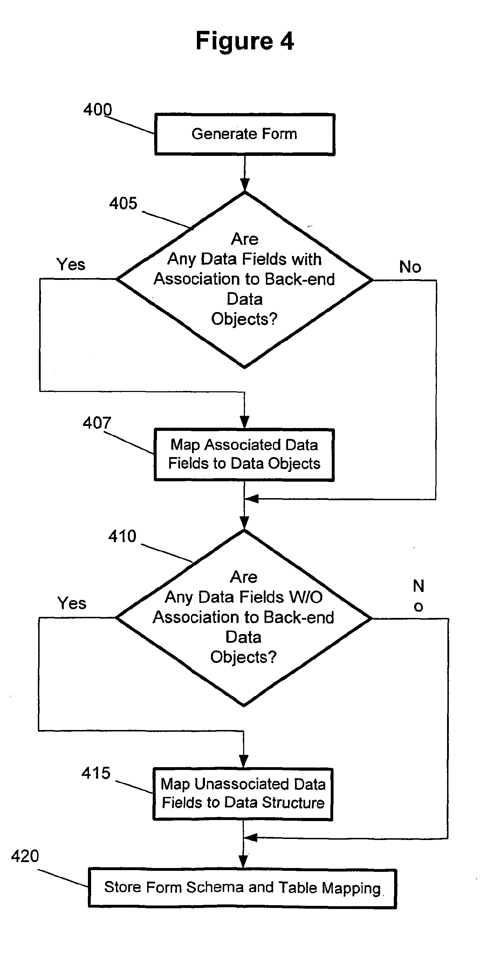

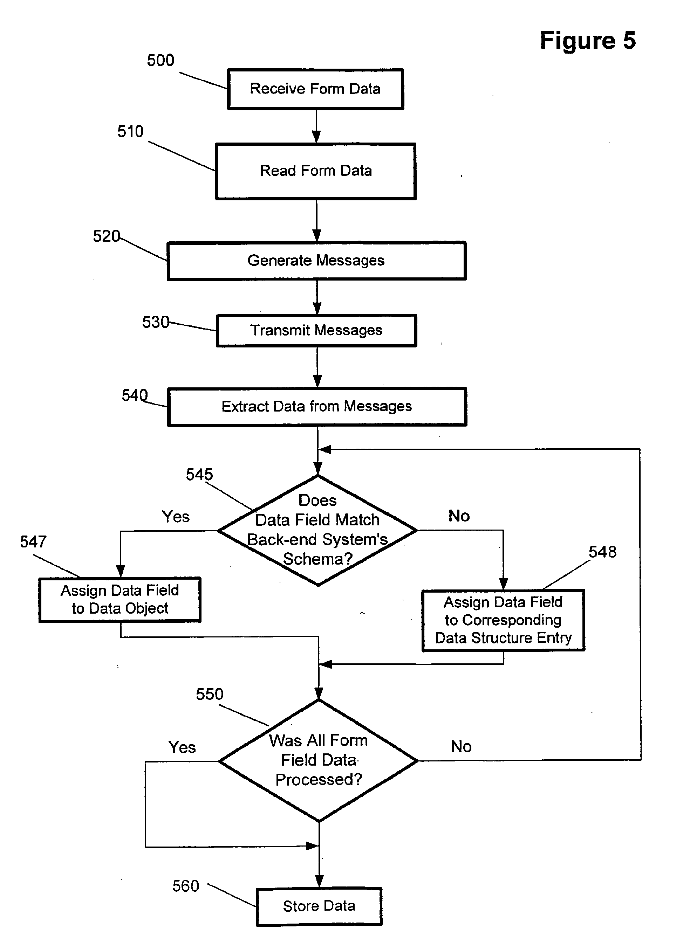

Figure 4 shows a flowchart for form design and schema mapping generation according to an embodiment of the present invention. The flowchart of Figure 4 relates to the form design 315 and schema mapping generator 375 of Figure 3. A form may be generated via user interaction with a design interface (400). If any data fields in the form are associated with data objects in the back end system (405), then a mapping may be generated between those data fields in the form and the data objects in the back-end system (407), and this mapping may be used for later processing of the form data. In some embodiments, the form may have one or more fields that do not have a relationship to a data object in the back-end system (i.e., the back-end system does not have a corresponding data object). If any data fields in the form are without an association to a data object in the back end system (410), then a data structure in the back end system may be set-up or modified to store data received for this field. An associated description of characteristics of this field may be stored for use in later identifying the stored data. In this case, the unassociated data fields are mapped to the data structure (415). For example, table(s) 370 of FIG. 3 may be set-up to receive this data. A message (e.g., XI message 320 of FIG. 2) may be generated that includes metadata based on the form's design. The mapping may be stored in a database, a computer-based portal and/or a public folder of a computer system which may be used offline or online (420). The method in flowchart in Figure 4 may be performed to set up the back-end system 130 to receive and process form data according to the method shown in Figure 5.

Figure 5 shows an exemplary embodiment of a method according to the present invention. Data may be received by the data warehouse 130 after a system user (e.g., at front-end system 110) has completed filling out a form (500). The back end system 130 may read the data (e.g., form data 325) entered on the form by the user (510). Messages may be generated on the basis of the form and the data of the form (e.g., message 330) (520). A message, e.g., XI message 330, may include form data values read from the form 115 after it was completed by a system user. The messages may be transmitted to a data processing (extraction) module of the back-end system 130 (530). The transmission may involve use of a message queue 345 and an exchange infrastructure system 340 that may be part of back-end system 130. Data may be extracted from the messages (540). For example, as in Figure 3, an extractor 365 may be used to extract data in a data warehouse system 360 that may be part of system 130. The extracted data may be processed via a schema mapping generator 375 in system 130. The schema mapping generator 375 defines the parameters of data structures in the data warehouse 130. If a data field matches a data object in the back-end system's data schema (545), then that data field may be assigned to a data object (547). In some embodiments, one or more fields in the form may not be associated with a data object in the back-end system. The data for such fields may be stored in a generic format (e.g., XML) along with field identifying information, and such data may be later processed by the back-end system using a predefined procedure that was designed to process these data fields. In some embodiments, the completed form itself may also be stored in the back-end system. If a data field does not match a data object in the back-end system's data schema (545), then that data field may be assigned to a corresponding entry in a data structure (548). The assignment of such unassociated data fields in the form to a data structure in the back-end system is discussed above with regard to FIG. 4. This mapping continues until the data for all the fields in the form has been processed (550). At that point, the extracted data may be stored in table 370 and/or as a data object in the back-end system 130 (560).

The method according to the present invention may be stored as a set of instructions that is accessible and executable by a processor. The processor may include a computer server arrangement. The set of instructions may be stored on a machine readable medium that use any medium capable of being read by a machine such as a compact disk, hard drive memory, floppy disk memory, DVD-ROM, CD-ROM or any type of machine-readable (computer-readable) storing medium. The set of instructions may be included within a computer program (which as is well known comprises a plurality of instructions) that is executable by a computer system.

The above is a detailed discussion of the certain embodiments. It may be understood that the examples discussed are for illustration purposes only and are not intended to limit the configuration to that shown. For example, the order of the steps performed may be varied where appropriate. It is of course intended that the scope of the claims may cover other embodiments than those described above and their equivalents.

## Claims

1. A method comprising:
extracting data from a form that was received at a computer system;
determining whether each of a plurality of fields in the form data match to data objects in a native data schema used by the computer system;
for each field in the form data that does not match a data object in computer system, storing the data received for that field within a part of a data structure that is assigned to that field of this form; and
using the extracted data at the computer system to generate a report.

2. The method of claim 1, wherein form data that does match a data object in computer system is also stored in said data structure.

3. The method of claim 1 or 2, wherein the form data is received as an Extensible Mark-up Language message.

4. The method of claim 1, 2 or 3, wherein the computer system includes a data warehouse system.

5. A machine-readable medium storing a set of instructions, the set of instructions capable of being executed by a processor to implement a method comprising:
extracting data from a form that was received at a computer system;
determining whether each of a plurality of fields in the form data match to data objects in a native data schema used by the computer system;
for each field in the form data that does not match a data object in computer system, storing the data received for that field within a part of a data structure that is assigned to that field of this form; and
using the extracted data at the computer system to generate a report.

6. The machine-readable medium of claim 5, wherein form data that does match a data object in computer system is also stored in said data structure.

7. The machine-readable medium of claim 5 or 6, wherein the form data is received as an Extensible Mark-up Language message.

8. The machine-readable medium of claim 5, 6 or 7, wherein the computer system includes a data warehouse system.

9. A method comprising:
generating an electronic form including fields for data entry;
generating a mapping between the fields and data objects of a data schema of a computer system;
storing the mapping at the computer system; and
receiving at the computer system form data that does not match data objects in the native data schema of the computer system.

10. The method of claim 9, wherein the form comprises an Extensible Mark-up Language form.

11. The method of claim 9 or 10, further comprising:
extracting data from the form data according to the native data schema of the computer system.

12. The method of claim 11, further comprising:
storing the extracted data on the computer system.

13. A machine-readable medium storing a set of instructions, the set of instructions capable of being executed by a processor to implement a method comprising:
generating an electronic form including fields for data entry;
generating a mapping between the fields and data objects of a data schema of a computer system;
storing the mapping at the computer system; and
receiving at the computer system form data that does not match data objects in the native data schema of the computer system.

14. The machine-readable medium of claim 13, wherein the form comprises an Extensible Mark-up Language form.

15. The machine-readable medium of claim 13 or 14, wherein the method further comprises:
extracting data from the form data according to the native data schema of the computer system.

16. The machine-readable medium of claim 13, 14 or 15, wherein the method further comprises:
storing the extracted data on the computer system.
